Europäisches Patentamt

European Patent Office

Office européen des brevets

(11) Publication number: **0 349 146**
**A2**

(12) **EUROPEAN PATENT APPLICATION**

(21) Application number: **89305952.7**

(22) Date of filing: **13.06.89**

(51) Int. Cl.⁴: **C08F 4/655 , C08F 10/02**

(30) Priority: **14.06.88 JP 144672/88**

(43) Date of publication of application:
**03.01.90 Bulletin 90/01**

(84) Designated Contracting States:
**DE FR GB NL**

(71) Applicant: NIPPON OIL CO. LTD.
3-12, 1-chome Nishi-Shinbashi
Minato-ku Tokyo 105(JP)

(72) Inventor: Shiraishi, Takeichi
2-18-3, Hama-cho Kawasaki-ku
Kawasaki-shi Kanagawa-ken(JP)
Inventor: Uchida, Wataru
3-35-3, Okubo Konan-ku
Yokohama-shi Kanagawa-ken(JP)
Inventor: Matsuura, Kazuo
2-22-18-102, Higashi-Yukigaya
Ota-ku Tokyo(JP)

(74) Representative: Cropp, John Anthony David et
al
MATHYS & SQUIRE 10 Fleet Street
London, EC4Y 1AY(GB)

(54) **Process for preparing ultra-high molecular weight polyethylene.**

(57) An ultra-high molecular weight is prepared by polymerizing ethylene in the presence of a catalyst comprising a solid catalyst component and an organometallic compound, characterized in that said solid catalyst component is a product obtained by contacting the following (1), (2) and (3) with an another:

(1) an oxygen-containing inorganic compound of magnesium;

(2) an aluminum halide etherate represented by the general formula $AlX_3 \cdot OR^1R^2$ wherein X is a halogen atom, $R^1$ and $R^2$ are each independently a hydrocarbon group having 1 to 8 carbon atoms; and

(3) a titanium compound represented by the general formula $Ti(OR^3)_4$ wherein $R^3$ is a hydrocarbon group having 1 to 20 carbon atoms.

EP 0 349 146 A2

## PROCESS FOR PREPARING ULTRA-HIGH MOLECULAR WEIGHT POLYETHYLENE

Background of the Invention

The present invention relates to a process for preparing an ultra-high molecular weight polyethylene and more particularly to a process for preparing an ultra-high molecular weight polyethylene superior in fluidity, free of fibril and readily soluble in a solvent by using a specific solid catalyst component and an organometallic compound.

Heretofore, for the preparation of an ultra-high molecular weight polyethylene, there have been known a number of processes each using a catalyst comprising as a carrier an inorganic magnesium compound such as magnesium halide, magnesium oxide or magnesium hydroxide and a transition metal compound such as titanium or vanadium compound supported on the carrier. However, these known processes involve various problems; for example, the resulting ultra-high molecular weight polyethylene is generally low in bulk density, wide in particle size distribution and the particles thereof are fibrillated so difficult to dissolve in a solvent.

Further, for the production of an ultra-high molecular weight polyethylene fiber by the gel spinning process which has recently been in increasing demand, it is absolutely necessary to provide an ultra-high molecular weight poly ethylene which is easy to dissolve in a solvent and affords a homogeneous gel.

Thus, it has been desired to develop an ultra-high molecular weight polyethylene free of the above-mentioned problems.

It is an object of the present invention to solve the above-mentioned problems.

It is another object of the present invention to provide a process for preparing in high yield an ultra-high molecular weight polyethylene small in average particle size, narrow in particle size distribution, superior in free fluidity, free of fibrillated particles, easy to dissolve in a solvent and suitable for use in gel spinning.

Summary of the Invention

The present invention resides in a process for preparing an ultrahigh molecular weight polyethylene in the presence of a catalyst comprising a solid catalyst component and an organometallic compound. Characterized in that the said solid catalyst component is a product obtained by contacting the following (1) to (3) together:

(1) an oxygen-containing inorganic compound of magnesium;

(2) an aluminum halide etherate represented by the general formula $AlX_3.OR^1R^2$ wherein X is a halogen atom, $R^1$ and $R^2$ are each a hydrocarbon group having 1 to 8 carbon atoms; and

(3) a titanium compound represented by the general formula $Ti(OR^3)_4$ wherein $R^3$ is a hydrocarbon group having 1 to 20 carbon atoms.

By using such specific catalyst according to the present invention there can be obtained an ultra-high molecular weight polyethylene having the following superior characteristics:

(1) Small average particle size; generally spherical, having a narrow particle size distribution; and high free fluidity.

(2) The particles are free of fibril and easy to dissolve in a solvent.

(3) Because of the above characteristics (1) and (2), in producing an ultra-high molecular weight polyethylene fiber according to a gel spinning process, the amount of a solvent required is small and there is obtained a homogeneous gel.

Detailed Description of the Invention

As examples of the oxygen-containing inorganic compound of magnesium used in the present invention there are mentioned magnesium hydroxide, magnesium oxide and magnesium carbonate, with magnesium oxide being particularly preferred. No special limitation is placed on what state these magnesium compounds should be, etc. Commercially available magnesium compounds may be used as they are, and as to magnesium oxide and magnesium carbonate, they may be used after calcining. Further, the oxygen-containing inorganic compounds of magnesium exemplified above may be treated before use with electron donors such as alcohols, esters, ketones, carboxylic acid, ethers, amines and phosphines.

The aluminum halide etherate used in the invention is preferably in a liquid phase under treating

2

conditions and it is represented by the general formula $AlX_3.OR^1R^2$ wherein X is a halogen atom, $R^1$ and $R^2$ are each a hydrocarbon group having 1 to 8, preferably 1 to 4, carbon atoms, with alkyl, aryl or aralkyl being preferred. Examples are aluminum fluoride dimethyl etherate, aluminum fluoride diethyl etherate, aluminum fluoride diisopropyl etherate, aluminum fluoride dibutyl etherate, aluminum fluoride methyl ethyl etherate, aluminum chloride dimethyl etherate, aluminum chloride diethyl etherate, aluminum chloride methyl ethyl etherate, aluminum chloride diallyl etherate, aluminum bromide dimethyl etherate, aluminum bromide diethyl etherate, aluminum iodide dimethyl etherate and aluminum iodide diethyl etherate, with aluminum chloride diethyl etherate and aluminum chloride dimethyl etherate being particularly preferred.

As the titanium compound of the general formula $Ti(OR^3)_4$ there is used one with $R^3$ in the formula being a hydrocarbon group having 1 to 20, preferably 1 to 8, carbon atoms. Examples of such hydrocarbon group are alkyl, aryl and aralkyl groups. As examples of the titanium compound are mentioned tetramethoxytitanium, tetraethoxytitanium, tetraisopropoxytitanium, tetrapropoxytitanium, tetrabutoxytitanium and tetrapentoxytitanium, with tetrabutoxytitanium being particularly preferred.

The solid catalyst component used in the present invention is obtained by contacting the components

    (1) an oxygen-containing inorganic compound of magnesium,
    (2) an aluminum halide etherate and
    (3) a titanium compound together.

The contacting order is not specially limited. For example, there may be used a method wherein the components (1), (2) and (3) are contacted simultaneously, or a method wherein the components (1) and (2) are first contacted with each other, followed by contact with the component (3), or a method wherein the components (1), (2) and (3) are contacted together, followed by contact again with the component (3). Preferably, the components (1) and (2) are first contacted with each other, followed by contact with the component (3). It is preferable that surplus component (3) be washed with a solvent after the contact treatment.

Conditions for contacting these components are not specially limited, but according to preferable conditions, they are mixed and reacted under heating at a temperature of 20-200°C, preferably 50-200°C, for 5 minutes to 10 hours, preferably 10 minutes to 2 hours, in an inert hydrocarbon solvent (e.g. hexane, heptane, toluene, or cyclohexane). Preferably, these operations are performed in an inert gas (e.g., nitrogen or helium) atmosphere and moisture should be avoided as far as possible.

As to the components' proportions in the contact treatment, the component (2) is used in an amount of 0.01 to 50 mmol, preferably 0.1 to 20 mmol, per gram of the component (1), and the component (3) is used in an amount of 0.01 to 60 mmol, preferably 0.10 to 30 mmol, per gram of the component (1).

The solid catalyst component thus obtained is used in combination with an organometallic compound as a catalyst in the preparation of an ultra-high molecular weight polyethylene.

As to the organometallic compound used in the present invention, there may be employed an organometallic compound of a metal of Groups I - IV in the Periodic Table which is known as a component of a Ziegler type catalyst. Particularly preferred are organoaluminum compounds and organozinc compounds. To illustrate these compounds, mention may be made of organoaluminum compounds of the general formulae $R_3Al$, $R_2AlX$, $RAlX_2$, $R_2AlOR$, $RAl(OR)X$ and $R_3Al_2X_3$ wherein the Rs may be the same or different and each R is an alkyl or aryl group having 1 to 20 carbon atoms and X is a halogen atom, as well as organozinc compounds of the general formula $R_2Zn$ wherein the Rs may be the same or different and each R is an alkyl group having 1 to 20 carbon atoms. Concrete examples are triethylaluminum, triisopropylaluminum, triisobutylaluminum, tri-sec-butylaluminum, tri-tert-butylaluminum, trihexylaluminum, trioctylaluminum, diethylaluminum chloride, diisopropylaluminum chloride, diethylaluminum ethoxide, ethylaluminum sesquichloride, diethylzinc, and mixtures thereof. It is preferable to use triethylaluminum and diethylaluminum chloride in combination.

The amount of the organometallic compound used is not specially limited. But usually it is in the range of 0.1 to 1,000 moles per mole of the titanium compound.

It is also preferable in the present invention that the organometallic compound component be used as a mixture or addition compound of the organometallic compound and an organic acid ester.

Where the organometallic compound component is used as a mixture of the organometallic compound and an organic acid ester, the organic acid ester is used usually in an amount of 0.1 to 1 mole, preferably 0.2 to 0.5 mole, per mole of the organometallic compound. Where it is used as an addition compound of the organometallic compound and the organic acid ester, the molar ratio is preferably in the range of 2:1 to 1:2.

The organic acid ester is the ester of a saturated or unsaturated, mono- or dibasic organic carboxylic acid having 1 to 24 carbon atoms and an alcohol having 1 to 30 carbon atoms. Examples are methyl formate, ethyl acetate, amyl acetate, phenyl acetate, octyl acetate, methyl methacrylate, ethyl stearate,

EP 0 349 146 A2

methyl benzoate, ethyl benzoate, n-propyl benzoate, iso-propyl benzoate, butyl benzoate, hexyl benzoate, cyclopentyl benzoate, cyclohexyl benzoate, phenyl benzoate, benzoic acid 4-tolyl, methyl salicylate, ethyl salicylate, methyl p-hydroxybenzoate, ethyl p-hydroxybenzoate, phenyl salicylate, cyclohexyl p-hydroxybenzoate, benzyl salicylate, ethyl α-resorcinol carboxylate, methyl anisate, ethyl anisate, phenyl anisate, benzyl anisate, methyl p-ethoxybenzoate, methyl p-toluylate, ethyl p-toluylate, phenyl p-toluylate, ethyl o-toluylate, ethyl m-toluylate, methyl p-aminobenzoate, ethyl p-aminobenzoate, vinyl benzoate, allyl benzoate, benzyl benzoate, methyl naphthoate, and ethyl naphthoate.

Particularly preferred are alkyl esters, especially methyl and ethyl ester, of benzoic acid, o- or p-toluic acid and anisic acid.

According to the present invention, an ultra-high molecular weight polyethylene is prepared using the catalyst described above under the following conditions. The ultra-high molecular weight polyethylene prepared by the present invention is of a molecular weight in the range of 600,000 to 12,000,000 preferably 900,000 to 6,000,000, more preferably 1,200,000 to 5,000,000, and has an intrinsic viscosity in the range of 6 to 50 dl/g, preferably 8 to 30 dl/g, more preferably 9 to 28 dl/g, as measured in decalin at 135°C.

The polymerization using the catalyst of the present invention for preparing an ultra-high molecular weight polyethylene can be performed in the form of slurry polymerization, solution polymerization or vapor phase polymerization. The catalyst used in the present invention is particularly suitable for slurry phase polymerization.

Ethylene is polymerized in a substantially oxygen- and water-free condition, in the presence of an inert hydrocarbon, at a hydrogen concentration of 0 to 20, preferably 0 to 10, mole %, at a temperature of 0° to 120°, preferably 20° to 100°C, and a pressure of 0 to 70, preferably 0 to 60, kg/cm²G. As examples of the inert hydrocarbon are mentioned saturated hydrocarbons such as butane, pentane, hexane, heptane, octane and cyclohexane, and aromatic hydrocarbons such as benzene, toluene and xylene. Where required in molding the resulting ultra-high molecular weight polyethylene, there also may be used high boiling, organic solvents such as decalin, tetralin, decane and kerosene.

The molecular weight can be adjusted to some extent by changing polymerizing conditions such as the polymerization temperature and the catalyst mole ratio. The addition of hydrogen into the polymerization system is more effective for this purpose. Of course, using the catalyst of the present invention, there may be performed, without any trouble, a multi-stage polymerization reaction involving two- or more-stage reactions and different polymerizing conditions such as different hydrogen concentrations and different polymerization temperatures.

Further, for the purpose of modifying the ultra-high molecular weight polyethylene of the present invention, one or more α-olefins or dienes may be copolymerized with ethylene. Examples of α-olefins include propylene, butene-1, hexene-1 and 4-methylpentene-1, while examples of dienes include butadiene, 1,4-hexadiene, ethyl norbornene and dicyclopentadiene.

According to such a process of the present invention there can be obtained an ultra-high molecular weight polyethylene having a small average particle diameter, a narrow particle size distribution, good free fluidity, having no fibrillated particles, and easy to dissolve in a solvent.

The following examples are given to illustrate the present invention concretely, but the invention is not limited thereto.

Example 1

a) Preparation of Catalyst

A commercially available MgO (Kyowa-Mag 30, a product of Kyowa Kagaku K.K.) was calcined at 400°C for 2 hours. 10g of the thus-calcined MgO was suspended in 50 ml of hexane, then 5 ml of aluminum chloride diethyl etherate was added and stirring was made for 2 hours under reflux of hexane. Further, 10 ml (29 mmol) of tetrabutoxytitanium was added and reaction was allowed to take place for 2 hours under reflux of hexane. Thereafter, the reaction mixture was washed with hexane, which washing was repeated until tetrabutoxytitanium was no longer recognized in the washing. The resulting solids were dried and analyzed to find that 42 mg of titanium was supported per gram of the solids.

(b) Polymerization of Ethylene

4

1,000 ml of hexane, 2.0 mmol of triethylaluminum, 2.0 mmol of diethylaluminum monochloride, and 20 mg of the solid catalyst component prepared above were charged in this order into a 2-liter autoclave at room temperature in a nitrogen atmosphere. Thereafter, the temperature was raised to 65°C and ethylene was introduced to a total pressure of 10 kg/cm²G, at which temperature and pressure there was conducted polymerization for 1 hour to obtain an ultra-high molecular weight polyethylene. Catalytic activity was 1,000g.polyethylene/g.solid catalyst.hr.$C_2H_4$ pressure.

(c) Evaluation of Physical Properties

As a result of evaluation of physical properties according to conventional methods, the ultra-high molecular weight polyethylene thus prepared was found to have a bulk density of 0.30 g/cm³, an intrinsic viscosity (in decalin at 135°C) of 16.0 dl/g, an average particle diameter of 200 μm and good free fluidity. When it was observed through an electron microscope of 3,000 magnification, there was recognized no fibril.

The solubility in an organic solvent was evaluated in terms of variations in intrinsic viscosity of the polymer in decalin at 135°C. More specifically, 0.02g of the polymer prepared above was added to 20 ml of decalin and ditertiary butyl hydroxytoluene was added as an antioxydant at a proportion of 0.25 wt% based on the weight of the polymer. This polymer solution was held at 140°C for 3 hours in a constant temperature bath and then held at 135°C for 1 hour in a viscosity measuring constant temperature bath, thereafter measured for viscosity at 135°C. The viscosity measurement was made in the following manner. 20 ml of the polymer solution was transferred into a viscosimeter and drop second was measured three times, then 10 ml of decalin was added and the same operation was repeated, thereafter another 10 ml of decalin was added and the same operation was repeated. Thereafter, the polymer solution was replaced by a fresh polymer solution and drop second was measured again in the same manner as above. These operations were repeated five times and for each time there was calculated [η] from a mean value of drop seconds. With the result as a degree of variations, there was calculated standard deviation/mean value (CV value, %). The CV value thus calculated was 2.5%, indicating that the solubility of the polymer was extremely high.

Table 1 shows the results of the evaluation of physical properties.

Example 2

The same procedure as in Example 1 was repeated except that as a magnesium compound there was used a commercially available MgO (Kyowa Mag 100, a product of Kyowa Kagaku K.K.) and the amount of the aluminum chloride diethyl etherate was changed from 5 ml to 15 ml and that of the tetrabutoxytitanium from 10 ml to 30 ml. The resultant polyethylene was evaluated for physical properties, the results of which are as set forth in Table 1.

Example 3

The same procedure as in Example 1 was repeated except that the MgO was replaced with Mg(OH)₂, 5 ml of the aluminum chloride diethyl etherate was replaced with 15 ml of aluminum dimethyl etherate, 10 ml of the tetrabutoxytitanium was replaced with 100 ml of tetraisopropoxytitanium, and the polymerization temperature was changed from 65°C to 75°C. The resultant polyethylene was evaluated for physical properties, the results of which are as shown in Table 1.

Example 4

The same procedure as in Example 1 was repeated except that the MgO was replaced with 10g of MgCO₃, the amount of the aluminum chloride diethyl etherate was changed from 5 ml to 15 ml and that of the tetrabutoxytitanium from 10 ml to 100 ml. The resultant polyethylene was evaluated for physical properties, the results of which are as shown in Table 1.

## Example 5

The same procedure as in Example 1 was repeated except that the amount of the aluminum chloride diethyl etherate was changed from 5 ml to 1 ml, 10 ml of the tetrabutoxytitanium was replaced with 5 ml of tetra-n-propoxytitanium, and the polymerization temperature was changed from 65°C to 55°C. The resultant polyethylene was evaluated for physical properties, the results of which are as set out in Table 1.

## Comparative Example 1

The same procedure as in Example 1 was repeated except that the aluminum chloride diethyl etherate was not used. The resultant polyethylene was evaluated for physical properties, the results of which are as set out in Table 1.

## Comparative Example 2

The same procedure as in Example 1 was repeated except that the tetrabutoxytitanium was replaced with titanium tetrachloride. The resultant polyethylene was evaluated for physical properties, the results of which are as set out in Table 1.

## Comparative Example 3

The same procedure as in Example 1 was repeated except that the MgO was replaced with $MgCl_2$. The resultant polyethylene was evaluated for physical properties, the results of which are as set forth in Table 1.

## Comparative Example 4

The same procedure as in Example 1 was repeated except that the MgO was replaced with $Al_2O_3$. The resultant polyethylene was evaluated for physical properties, the results of which are as set forth in Table 1.

Table 1

| | Solid Catalyst Component | | | Polym. temp. (°C) | Catalyst activity g.PE/g.solid catalyst.h.C$_2$H$_4$ pressure | Bulk density (g/cm$^3$) | Average particle diameter (μm) | Intrinsic viscosity (dℓ/g) | Molecular weight | CV value (%) | Fibril [1] |
|---|---|---|---|---|---|---|---|---|---|---|---|
| | Mg compound | Aℓ Halid etherate | Ti(OR)$_4$ | | | | | | | | |
| Ex. 1 | MgO 10g | AℓCℓ$_3$ diethyl etherate 5 mℓ | Tetrabutoxytitanium 10 mℓ | 65 | 1000 | 0.30 | 200 | 16.0 | 2,390,000 | 2.5 | o |
| Ex. 2 | MgO 10g | - ditto - 15 mℓ | - ditto - 30 mℓ | 65 | 1500 | 0.33 | 230 | 15.5 | 2,290,000 | 2.3 | o |
| Ex. 3 | Mg(OH)$_2$ 10g | AℓCℓ$_3$ dimethyl etherate 15 mℓ | Tetraisopropoxytitanium 100 mℓ | 75 | 1600 | 0.33 | 230 | 10.0 | 1,260,000 | 1.5 | o |
| Ex. 4 | MgCO$_3$ 10g | AℓCℓ$_3$ diethyl etherate 15 mℓ | Tetrabutoxytitanium 100 mℓ | 65 | 1500 | 0.30 | 240 | 17.0 | 2,600,000 | 2.7 | o |
| Ex. 5 | MgO 10g | AℓCℓ$_3$ diethyl etherate 1 mℓ | Tetra-n-propoxytitanium 5 mℓ | 55 | 800 | 0.30 | 190 | 25.0 | 4,410,000 | 3.1 | o |
| Comp.Ex. 1 | Mgo 30g | Not used | Tetrabutoxytitanium 10 mℓ | 65 | 50 | 0.19 | 200 | 20.0 | 3,250,000 | 2.8 | x |
| Comp.Ex. 2 | ditto | AℓCℓ$_3$ diethyl etherate 5 mℓ | Titanium tetrachloride 10 mℓ [3] | 65 | 1100 | 0.30 | 200 | 15.8 | 2,350,000 | 5.3 | x |
| Comp.Ex. 3 | MgCℓ$_2$ 10g [2] | - ditto - | Tetrabutoxytitanium 10 mℓ | 65 | 1500 | 0.33 | 230 | 15.0 | 2,190,000 | 5.0 | x |
| Comp.Ex. 4 | Aℓ$_2$O$_3$ 10g [2] | - ditto - | - ditto - | 65 | 600 | 0.27 | 200 | 17.5 | 2,700,000 | 6.0 | Δ |

[1] o: not formed at all, Δ: slightly formed, x: present

[2] Oxygen-containing inorganic compound of Mg was not used.

[3] Ti(OR)$_4$ was not used.

## Claims

1. A process for preparing an ultra-high molecular weight polyethylene in the presence of a catalyst comprising a solid catalyst component and an organometallic compound, characterized in that said solid catalyst component is a product obtained by contacting the following (1), (2) and (3) with one another:

(1) an oxygen-containing inorganic compound of magnesium;

(2) an aluminum halide etherate represented by the general formula $AIX_3 \cdot OR^1R^2$ wherein X is a halogen atom, $R^1$ and $R^2$ are each independently a hydrocarbon group having 1 to 8 carbon atoms; and

(3) a titanium compound represented by the general formula $Ti(OR^3)_4$ wherein $R^3$ is a hydrocarbon group having 1 to 20 carbon atoms.

2. A process as set forth in Claim 1, wherein said oxygen-containing inorganic compound of magnesium is magnesium hydroxide, magnesium oxide, or magnesium carbonate.

3. A process as set forth in Claim 1 or Claim 2 wherein said aluminum halide etherate is liquid under treating conditions.

4. A process as set forth in any one of Claims 1 to 3 wherein X is chlorine and $R^1$ and $R^2$ are each independently an alkyl, aryl or aralkyl group having 1 to 4 carbon atoms.

5. A process as set forth in any one of Claims 1 to 4, wherein $R^3$ is an alkyl, aryl or aralkyl group having 1 to 8 carbon atoms.

6. A process as set forth in any one of Claims 1 to 5, wherein the amount of the component (2) and that of the component (3) are 0.01 to 50 mmol and 0.01 to 60 mmol, respectively, per gram of the component (1).

7. A process as set forth in any one of Claims 1 to 6, wherein polymerisation is performed in the presence of an inert hydrocarbon at a hydrogen concentration of 0 to 20 mole%, at a temperature of $0°$ to $120°C$ and at a pressure of 0 to 70kg/cm$^2$ G.

8. A shaped article comprising polyethylene obtained by a process as claimed in any one of Claims 1 to 7.

9. A fibre obtained by gel spinning from polyethylene obtained by a process as claimed in any one of Claims 1 to 7.